# FASCICULE DE BREVET EUROPEEN

(11) **EP 1 612 139 B1**
(45) Date de publication et mention de la délivrance du brevet: **20.02.2008**
(21) Numéro de dépôt: 05352013.6
(22) Date de dépôt: 20.06.2005
(51) Int. Cl.: B64C 1/36

(54) **Dispositif et procédé de fixation d'un radôme d'aéronef**
Vorrichtung und Verfahren zur Befestigung eines Flugzeug-Radoms
Device and method for mouting the radome of an aircraft

(30) Priorité: 29.06.2004 FR 0407090
(43) Date de publication de la demande: 04.01.2006
(73) Titulaire: AIRBUS France, 31060 Toulouse Cedex (FR)
(72) Inventeur: Jeanneau, Charlotte, 31530 Levignac (FR); Roques, Jean-Claude, 31500 Toulouse (FR); Gilabert, Rolland, 81800 Rabastens (FR); Bellet, Daniel, 31170 Tournefeuille (FR); Front, Emmanuel, 31300 Toulouse (FR); Rigal, Henri, 65360 Vielle-Adour (FR)
(74) Mandataire: Sarraméa, Claude

(56) Documents cités:
- GB-A- 1 092 831
- US-A- 2 820 499
- US-A- 3 020 946
- US-A- 3 545 146
- US-A- 5 979 831

## Description

L'invention a pour objet un dispositif de fixation d'un radôme d'aéronef, notamment d'un radôme situé en pointe avant de cet aéronef. Elle concerne aussi un aéronef équipé d'un tel dispositif de fixation, ainsi qu'un procédé de fixation d'un radôme sur un aéronef.

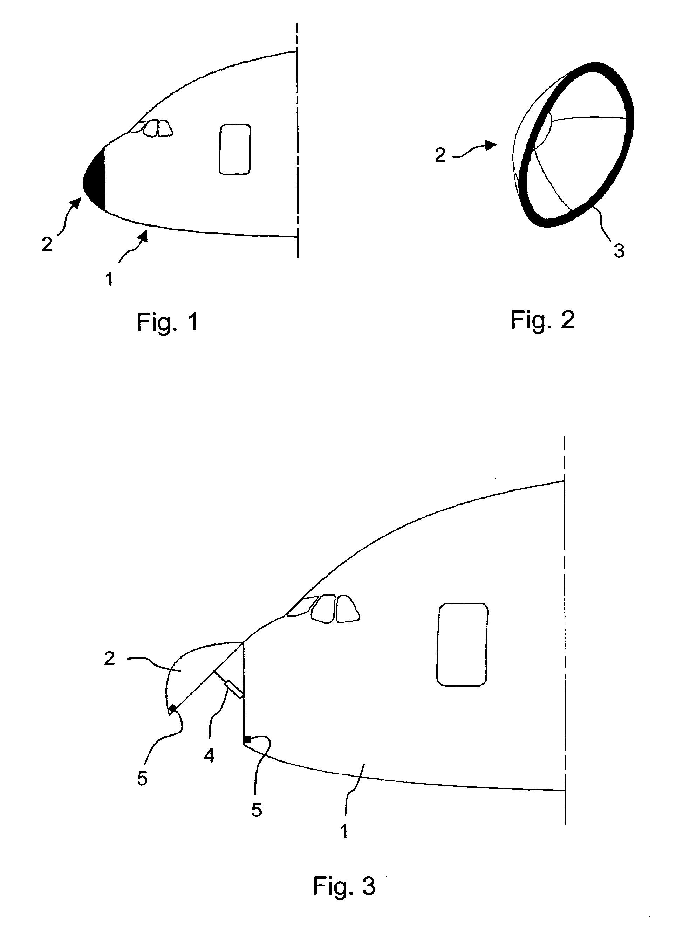

La plupart des aéronefs, notamment les avions de transport civil, comportent un radôme situé en pointe avant du fuselage. La figure 1 représente un tel radôme 2 fixé sur la pointe avant du fuselage 1 d'un aéronef. La figure 2 représente une vue en perspective d'un tel radôme, notamment son périmètre 3 apte à venir en contact avec le fuselage 1 de l'aéronef. Généralement, ce radôme permet de protéger un radar et de ce fait est réalisé dans un matériau perméable aux ondes électromagnétiques, par exemple un matériau composite électriquement isolant. Un tel matériau est généralement plus souple et plus déformable que la structure du fuselage sur lequel est fixé ce radôme. De façon à garantir les meilleures performances aérodynamiques de l'aéronef, le radôme 2 doit être fixé sur l'aéronef 1 d'une part avec des jeux inférieurs à une valeur prédéterminée au niveau de la jonction entre le périmètre 3 du radôme et le fuselage 1 de l'aéronef et d'autre part en évitant des désaffleurements entre la surface du radôme et la surface du fuselage, lesquels seraient sources de discontinuité dans l'écoulement de l'air sur la surface de l'aéronef, et par conséquent de turbulences qui risqueraient de diminuer les performances aérodynamiques dudit aéronef.

De façon connue, comme représenté sur la figure 3, un radôme 2 peut être fixé sur le fuselage 1 d'un aéronef en utilisant d'une part des vérins 4 permettant de dégager ledit radôme, par exemple lors d'opérations de maintenance d'un radar situé à la pointe avant du fuselage 1, et d'autre part des moyens de verrouillage 5 qui permettent de maintenir en place ce radôme sur le fuselage lors de l'utilisation de l'aéronef. Un tel dispositif de fixation donne généralement satisfaction pour des radômes de pointe avant d'aéronefs petits ou moyens porteurs. Toutefois, dans le cas d'avions gros porteurs ou très gros porteurs dont les dimensions du radôme de pointe avant sont adaptées aux dimensions desdits avions, du fait de la souplesse dudit radôme inhérente aux caractéristiques du matériau constitutif de ce radôme, un tel dispositif de fixation présenterait l'inconvénient d'entraîner des désaffleurements de la surface du radôme par rapport à la surface du fuselage de l'aéronef.

Ces problèmes sont résolus conformément à l'invention par un dispositif de fixation d'un radôme d'aéronef, caractérisé en ce qu'il comporte :
- une pluralité de premières fixations aptes à assurer chacune un positionnement dudit radôme selon deux axes distincts contenus dans un plan sensiblement perpendiculaire à l'axe longitudinal de cette fixation ; et
- une pluralité de secondes fixations aptes à assurer chacune un positionnement dudit radôme, lors de son montage, selon un seul axe d'un plan sensiblement perpendiculaire à l'axe longitudinal de cette fixation.

De cette façon, lesdites premières fixations permettent le centrage du radôme sur le fuselage de l'aéronef alors que lesdites secondes fixations permettent de positionner le radôme, entre lesdites premières fixations, tout en conservant une liberté de positionnement selon un axe lors du montage desdites secondes fixations. Ce dispositif permet donc de résoudre les problèmes de l'art antérieur.

De préférence, ledit seul axe selon lequel est assuré le positionnement du radôme par chacune desdites secondes fixations est sensiblement perpendiculaire à la tangente au périmètre du radôme au point où la distance entre d'une part ledit périmètre du radôme apte à venir en contact avec le fuselage et d'autre part l'axe longitudinal de ladite fixation est minimale. De cette façon, le dispositif selon l'invention permet d'assurer un parfait affleurement de la surface extérieure du radôme avec la surface extérieure du fuselage, tout en permettant de conserver des jeux de montage, au niveau de chacune des secondes fixations, selon une direction parallèle à la tangente au périmètre du radôme en contact avec le fuselage au point où la distance entre d'une part ledit périmètre du radôme en contact avec le fuselage et d'autre part l'axe longitudinal de ladite fixation est minimale.

Dans un mode de réalisation de l'invention, ledit plan sensiblement perpendiculaire à l'axe longitudinal de chaque fixation est sensiblement perpendiculaire à l'axe longitudinal de l'aéronef.

De façon avantageuse, lesdites premières et secondes fixations sont accessibles depuis l'intérieur dudit radôme. Ainsi, ces fixations ne nécessitent pas d'élément extérieur à la surface du radôme ou du fuselage, qui risquerait de dégrader les performances aérodynamiques de l'aéronef.

Dans un mode de réalisation de l'invention, lesdites premières et secondes fixations comportent chacune une partie de forme convexe solidaire du radôme, apte à être engagée dans une partie de forme concave solidaire du fuselage de l'aéronef. Toutefois, ce mode de réalisation n'est pas exclusif et on peut aussi envisager une variante dans laquelle lesdites premières et secondes fixations comportent chacune une partie de forme concave solidaire du radôme, apte à être engagée dans une partie de forme convexe solidaire du fuselage de l'aéronef.

De façon avantageuse, ladite partie de forme convexe, relative aux premières fixations, est de forme sensiblement hémisphérique. La partie de forme convexe, relative aux secondes fixations, est quant à elle de forme sensiblement hémisphérique, tronquée par deux plans sensiblement parallèles à l'axe longitudinal de la fixation et situés de part et d'autre de cet axe longitudinal. Ces deux plans permettent de définir ledit seul axe contenu dans un plan sensiblement perpendiculaire à l'axe longitudinal de la seconde fixation considérée et selon lequel ladite fixation assure le positionnement du radôme. Ce seul axe est parallèle à ces deux plans et perpendiculaire à l'axe longitudinal de la fixation considérée. Le fait de tronquer cette partie sensiblement hémisphérique permet ainsi de bénéficier d'un jeu de montage lors de l'insertion de ladite partie dans la partie convexe de la seconde fixation considérée.

De façon avantageuse encore, ladite partie de forme sensiblement hémisphérique des premières et secondes fixations est tronquée dans la partie opposée à sa base.

De préférence, la partie de forme concave de chacune des premières et secondes fixations est complémentaire de la partie de forme convexe sensiblement hémisphérique correspondant aux premières fixations.

De préférence encore, lesdites premières et secondes fixations comportent une ferrure solidaire de la coque du radôme.

Dans un mode de réalisation de l'invention, lesdites premières et secondes fixations sont des fixations vissées.

Dans ce cas, la partie de forme concave de chacune des premières et secondes fixations est avantageusement percée selon l'axe longitudinal de la fixation considérée de façon à pouvoir recevoir une vis pour solidariser cette partie de forme concave avec la partie de forme convexe complémentaire.

Dans ce cas également, la partie de forme convexe de chacune des premières et secondes fixations est avantageusement percée selon l'axe longitudinal de la fixation considérée et taraudée de façon à pouvoir recevoir une vis pour solidariser cette partie de forme convexe avec la partie de forme concave complémentaire.

De préférence, la partie de forme convexe de chacune des premières fixations est apte à recevoir une tige de guidage apte à coopérer avec la partie de forme concave de la fixation considérée pour guider le radôme lors de la mise en place dudit radôme sur le fuselage.

Dans un mode préféré de réalisation de l'invention, au moins une partie desdites premières et/ou secondes fixations sont réalisées au moins partiellement dans au moins un matériau électriquement conducteur et sont raccordées électriquement à un élément conducteur situé sur la surface extérieure du radôme.

Le nombre et le dimensionnement des fixations électriquement conductrices sont alors avantageusement prévus pour permettre l'écoulement des courants dus aux impacts de foudre sur le radôme vers le fuselage de l'aéronef.

L'invention concerne également un aéronef comportant un radôme de pointe avant caractérisé en ce que ledit radôme est fixé au fuselage de l'aéronef au moyen d'un tel dispositif de fixation.

L'invention concerne également un procédé de montage d'un radôme sur la pointe avant d'un aéronef qui est remarquable en ce qu'il comporte les étapes suivantes :
- a1) fixer un ensemble de ferrures à l'intérieur dudit radôme, réparties à proximité du périmètre de ce radôme venant en contact avec le fuselage de l'aéronef ;
- b1) choisir un sous-ensemble de ferrures réparties dans l'ensemble de ferrures fixées sur le radôme à l'étape a1) et fixer une partie de forme convexe correspondant à une première fixation, telle que décrite précédemment, sur chacune des ferrures dudit sous-ensemble ;
- b2) fixer une partie de forme convexe correspondant à une seconde fixation, telle que décrite précédemment, sur chacune des ferrures placées à l'étape a1) et n'appartenant pas au sous-ensemble choisi à l'étape b1), en orientant ladite partie de forme convexe de façon à ce que ledit seul axe, contenu dans un plan perpendiculaire à l'axe longitudinal de cette fixation, selon lequel ladite seconde fixation assure le positionnement du radôme soit sensiblement perpendiculaire à la tangente au périmètre du radôme au point où la distance entre d'une part ledit périmètre du radôme apte à venir en contact avec le fuselage et d'autre part l'axe longitudinal de ladite fixation est minimale ;
- c) fixer des parties de forme concave sur un cadre du fuselage, de façon à ce que ces parties de forme concave soient en regard de chacune desdites parties de forme convexe lorsque le radôme est placé à sa position prévue sur l'aéronef ;
- d) mettre en place des tiges de guidage sur chacune des parties de forme convexe correspondant à des premières fixations placées à l'étape b1) ;
- e) présenter le radôme devant le fuselage et insérer lesdites tiges de guidage mises en place à l'étape d) dans les parties de forme concave correspondantes fixées sur le fuselage à l'étape c) jusqu'à ce que lesdites tiges de guidage traversent lesdites parties de forme concave ;
- f) mettre en place un dispositif de verrouillage à l'extrémité de chacune desdites tiges de guidage de façon à sécuriser la mise en place du radôme sur le fuselage de l'aéronef ;
- g) mettre en place une vis dans chacune des parties concaves des secondes fixations, par la face de ladite partie concave opposée à sa face en contact avec la partie convexe solidaire du radôme et visser cette vis dans cette partie convexe ;
- h) enlever les tiges de guidage des premières fixations et les remplacer par des vis de façon similaire aux secondes fixations (étape g)).

De façon avantageuse, le procédé de montage d'un radôme selon l'invention comporte en outre l'étape suivante après l'étape a1) :
- a2) surfacer et aléser chacune des ferrures mises en place à l'étape a1).

L'invention sera mieux comprise à la lecture de la description qui suit et à l'examen des figures annexées. Sur ces figures, des références identiques désignent des éléments semblables :
La figure 1 déjà décrite représente un aéronef comportant un radôme sur sa pointe avant.
La figure 2 déjà décrite est une vue en perspective d'un radôme.
La figure 3 déjà décrite est une vue d'un dispositif de fixation selon l'art antérieur.
La figure 4 est une vue en perspective d'un radôme comportant des parties de premières et de secondes fixations selon l'invention.
La figure 5a est une vue en perspective d'une partie convexe d'une première fixation ; la figure 5b est une vue en plan de cette partie convexe, selon la flèche F de la figure 5a ; la figure 5c et une vue en coupe selon la ligne A-A de la figure 5b.
La figure 6a est une vue en perspective d'une partie convexe d'une seconde fixation ; la figure 6b est une vue en plan de cette partie convexe, selon la flèche F2 de la figure 6a ; la figure 6c et une vue en coupe selon la ligne B-B de la figure 6b.
La figure 7 est une vue en perspective éclatée d'une première ou seconde fixation selon l'invention.
La figure 8 est une vue en coupe, assemblée, d'une première ou seconde fixation selon l'invention.
Les figures 9a et 9b sont des vues en perspective d'une ferrure ; la figure 9c est une vue en coupe selon la ligne C-C de la figure 9b.
La figure 10a est une vue en coupe d'un radôme de pointe avant d'aéronef sur lequel sont fixées des ferrures de premières et/ou secondes fixations selon l'invention ; la figure 10b est une vue détaillée des deux ferrures situées en partie inférieure de la figure 10a et entourées par un cercle sur ladite figure 10a.
La figure 11 est une vue de l'intérieur d'un radôme, équipé de premières et de secondes fixations selon l'invention, depuis sa partie ouverte dont le périmètre est apte à venir en contact avec le fuselage de l'aéronef. Pour plus de clarté de la figure, seules les parties convexes des fixations sont représentées.

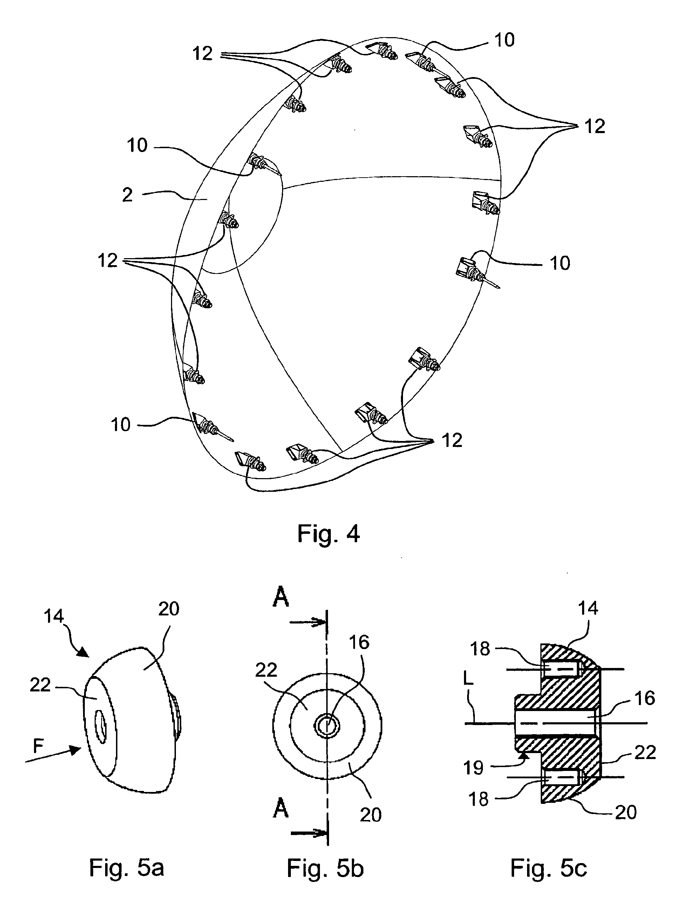

Dans un mode préféré de réalisation représenté partiellement sur la figure 4, le dispositif de fixation d'un radôme 2 d'aéronef conforme à l'invention comporte :
- une pluralité de premières fixations 10 aptes à assurer chacune un positionnement dudit radôme selon deux axes distincts contenus dans un plan sensiblement perpendiculaire à l'axe longitudinal L de cette fixation ; et
- une pluralité de secondes fixations 12 aptes à assurer chacune un positionnement dudit radôme, lors de son montage, selon un seul axe d'un plan sensiblement perpendiculaire à l'axe longitudinal L de cette fixation.

Sur cette figure, le fuselage 1 de l'aéronef n'est pas représenté. Quatre premières fixations 10 sont disposées à l'intérieur du radôme, à proximité du périmètre 3 de celui-ci apte à venir en contact avec le fuselage de l'aéronef. Avantageusement, ces premières fixations sont réparties, de préférence de façon sensiblement régulière, à proximité dudit périmètre 3. De cette façon, elles permettent le centrage du radôme 2 sur le fuselage 1 de l'aéronef. Des secondes fixations 12 sont réparties de façon sensiblement régulière, entre lesdites premières fixations 12, à l'intérieur du radôme, à proximité dudit périmètre 3 de celui-ci. Dans le mode de réalisation représenté sur la figure 4, treize secondes fixations 12 sont réparties entre les quatre premières fixations 10. Ces fixations 10, 12 étant disposées à l'intérieur du radôme 2, ce mode de réalisation présente l'avantage de ne pas présenter de partie de fixation extérieure au radôme 2 ou au fuselage 1 et par conséquent de ne pas perturber les performances aérodynamiques de l'aéronef.

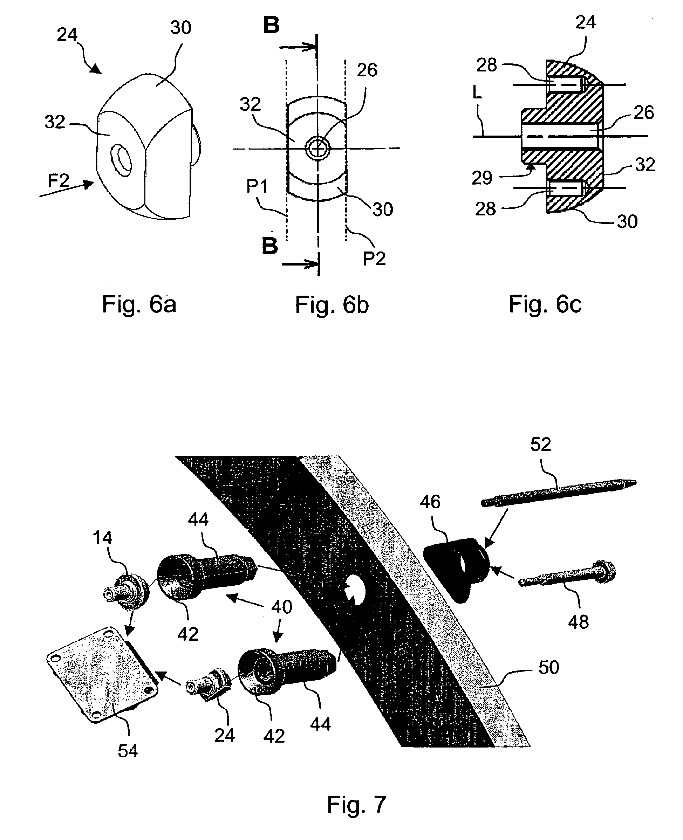

Lesdites premières et secondes fixations comportent chacune une partie 14, 24 de forme convexe solidaire du radôme 2. Une partie 14 de forme convexe correspondant aux premières fixations 10 est représentée sur les figures 5a, 5b et 5c. Cette partie 14 comporte une surface 20 de forme sensiblement hémisphérique. Cette dernière est tronquée dans la partie opposée à sa base, qui présente de ce fait une partie plane 22. De préférence, la base est prolongée par une partie 19 de forme cylindrique coaxiale de l'axe longitudinal L de la fixation considérée. Cette partie 19 permet le centrage de ladite partie 14 sur un support solidaire du radôme 2. Dans un mode de réalisation, ladite base de la partie de forme sensiblement hémisphérique 20 comporte des trous taraudés 18 qui permettent la fixation de la partie 14 sur ledit support solidaire du radôme. Toutefois, ce mode de fixation n'est pas exclusif et des variantes peuvent être envisagées. Dans une variante, la partie 19 de forme cylindrique est filetée de façon à pouvoir soit être vissée dans un trou taraudé dudit support solidaire du radôme, soit être fixée sur ledit support au moyen d'un écrou. Dans ce cas, la partie 19 permet à la fois le centrage et la fixation de la partie 14 sur ledit support. Avantageusement, la partie 14 est percée d'un trou taraudé 16, selon l'axe longitudinal L de la fixation considérée. De façon similaire, une partie 24 de forme convexe correspondant aux secondes fixations 12 est représentée sur les figures 6a, 6b et 6c. Cette partie 24 comporte une surface 30 de forme sensiblement hémisphérique. Cette dernière est tronquée dans la partie opposée à sa base, qui présente de ce fait une partie plane 32. Elle est en outre tronquée selon deux plans P1 et P2 sensiblement parallèles à l'axe longitudinal L de la fixation considérée et situés de part et d'autre dudit axe longitudinal L. Ledit seul axe d'un plan sensiblement perpendiculaire à l'axe longitudinal L de la fixation, selon lequel la seconde fixation considérée assure le positionnement du radôme 2, est alors parallèle à la ligne B-B représentée figure 6b. Par ailleurs, ledit seul axe présente une intersection avec ledit axe longitudinal L. De préférence, la base est prolongée par une partie 29 de forme cylindrique coaxiale de l'axe longitudinal L de la fixation considérée. Cette partie 29 permet le centrage de ladite partie 24 sur un support solidaire du radôme 2. Dans un mode de réalisation, ladite base de la partie de forme sensiblement hémisphérique 30 comporte des trous taraudés 28 qui permettent la fixation de la partie 24 sur ledit support solidaire du radôme. Toutefois, ce mode de fixation n'est pas exclusif et des variantes peuvent être envisagées. Dans une variante, la partie 29 de forme cylindrique est filetée de façon à pouvoir soit être vissée dans un trou taraudé dudit support solidaire du radôme, soit être fixée sur ledit support au moyen d'un écrou. Dans ce cas, la partie 29 permet à la fois le centrage et la fixation de la partie 24 sur ledit support. Avantageusement, la partie 24 est percée d'un trou taraudé 26, selon l'axe longitudinal L de la fixation considérée.

Dans un mode préféré de réalisation de la partie convexe 24 des secondes fixations 12, le diamètre de la face plane 32 de cette partie convexe est légèrement inférieur au diamètre d'une face plane complémentaire de la partie concave 42 de la seconde fixation considérée, sur laquelle la face plane vient en appui lorsque ladite seconde fixation est assemblée.

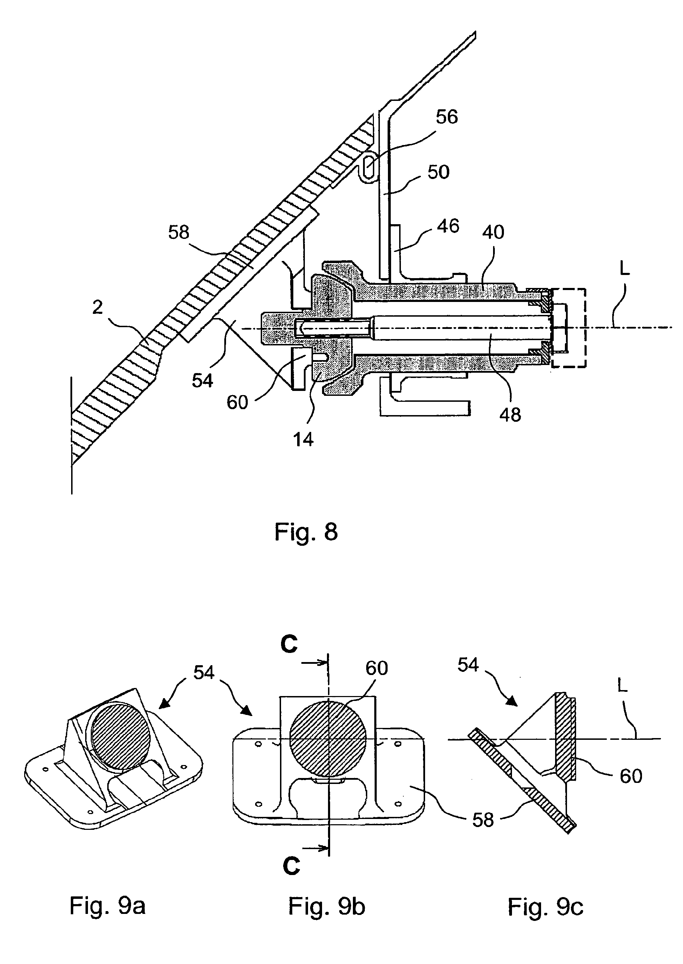

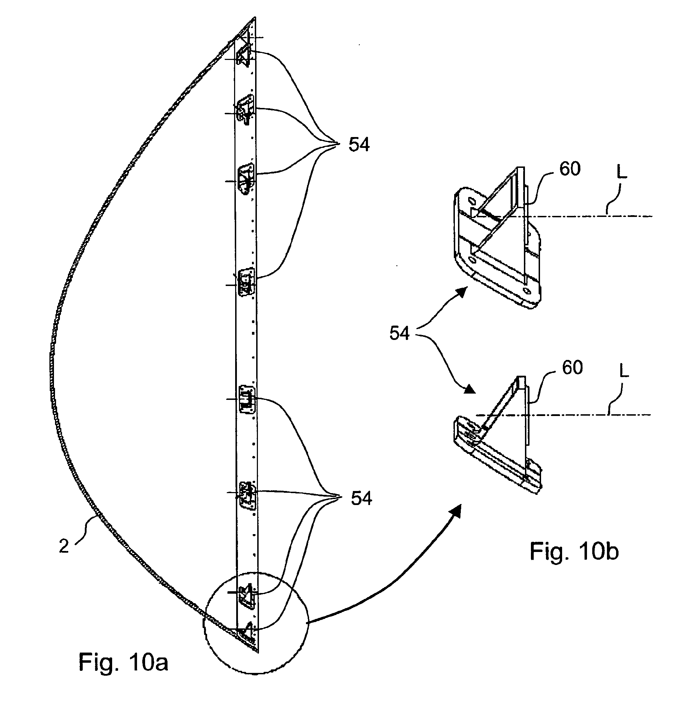

Ledit support solidaire du radôme 2 est de préférence une ferrure 54 représentée figures 9a, 9b et 9c. Cette ferrure comporte une base 58 apte à être fixée sur une surface intérieure du radôme 2. Elle comporte aussi une face plane 60 sensiblement perpendiculaire à l'axe longitudinal L de la fixation considérée. Lorsque les parties convexes 14, 24 comportent une partie cylindrique 19, 29, cette face plane 60 comporte un trou (non représenté) coaxial dudit axe longitudinal L et apte à recevoir ladite partie cylindrique. La figure 10a est une vue en coupe d'un radôme 2 sur lequel sont fixées des ferrures 54 correspondant à des premières et secondes fixations dudit radôme sur le fuselage d'un aéronef. Dans un mode de réalisation préféré représenté sur cette figure, les faces planes 60 des différentes ferrures 54 sont orientées de façon à ce que les axes longitudinaux L de chacune desdites fixations (qui sont sensiblement perpendiculaires aux dites faces planes 60) soient sensiblement parallèles entre eux et à l'axe longitudinal de l'aéronef sur lequel le radôme 2 doit être fixé. Pour cela, les différentes ferrures 54 peuvent être de formes géométriques différentes entre elles et adaptées aux emplacements du radôme 2 auxquels sont fixées lesdites ferrures. La figure 10b représente de façon détaillée les deux ferrures inférieures de la figure 10a, en position sur le radôme 2.

Les figures 7 et 8 représentent indifféremment une première ou une seconde fixation 10, 12 conforme à l'invention. Une ferrure 54 est fixée par sa base 58 sur le radôme 2. Une partie convexe 14 (ou 24) est fixée sur la face plane 60 de cette ferrure. En regard de ladite partie convexe, un goujon 40 est fixé sur un cadre 50 du fuselage 1 de l'aéronef. Ce goujon 40 comporte une partie concave 42 complémentaire de ladite partie convexe 14 ainsi qu'une partie cylindrique 44 apte à être engagée dans un trou dudit cadre 50 du fuselage, ledit trou étant coaxial de l'axe longitudinal de la fixation considérée. Dans un mode préféré de réalisation représenté sur les figures 7 et 8, ladite partie cylindrique 44 est filetée et un étier 46 est fixé sur le cadre 50. Cet étrier 46 comporte un trou taraudé coaxial de l'axe longitudinal de la fixation considérée, apte à recevoir ladite partie cylindrique filetée 44. Cela permet avantageusement d'assurer la fixation dudit goujon 40 sur le cadre 50 du fuselage, ainsi que le réglage en position de la partie concave 42 dudit goujon 40 selon l'axe longitudinal L de la fixation. Le goujon 40 est percé d'un trou coaxial de l'axe longitudinal de la fixation considérée. Ce trou permet de recevoir une vis 48 dont une extrémité est apte à être engagée dans le trou taraudé 16, 26 de la partie convexe 14, 24. Cette vis permet ainsi de solidariser ladite partie convexe 14, 24 sur le goujon 40 et donc avec le cadre 50 du fuselage 1. De façon avantageuse, un joint 56 est fixé sur le radôme 2 à proximité dudit périmètre 3 de celui-ci. Ce joint vient en contact avec le fuselage 1 de l'aéronef de façon à assurer l'étanchéité du volume situé à l'intérieur du radôme.

Le trou taraudé 16 de la partie convexe 14 des premières fixations 10 peut recevoir une tige de guidage cylindrique 52 comportant une extrémité filetée apte à être vissée dans ce trou taraudé. De préférence, le trou pratiqué dans le goujon 40, coaxial de l'axe longitudinal L de la fixation, est de diamètre suffisamment supérieur au diamètre de cette tige de guidage 52 pour faciliter l'insertion de cette tige de guidage dans ce trou. Par exemple, le diamètre de ce trou peut être choisi 2 à 3 fois supérieur au diamètre de la tige de guidage 52.

La partie concave 42 étant complémentaire d'une partie convexe 14 de première fixation, il en résulte avantageusement que :
- d'une part chaque première fixation 10 permet de fixer la position du radôme 2 relativement au fuselage 1 à l'emplacement de ladite fixation. En effet, la partie convexe 14 vient se centrer dans la partie concave 42 sans aucun degré de liberté, assurant ainsi le positionnement du radôme 2 relativement au fuselage 1 selon deux axes d'un plan perpendiculaire à l'axe longitudinal L de cette fixation et aussi selon ledit axe longitudinal L ; et
- d'autre part chaque seconde fixation 12 permet de maintenir le radôme 2 sur le fuselage 1 en bénéficiant d'un degré de liberté lors de l'assemblage de ladite fixation. En effet, la partie convexe 24 étant tronquée par les plans P1 et P2, elle peut être positionnée dans la partie concave 42 en bénéficiant de jeu de montage selon un axe sensiblement perpendiculaire à ces deux plans ainsi qu'à l'axe longitudinal de ladite fixation. Ainsi, lorsqu'on oriente la partie convexe 24 de façon à ce que ledit seul axe d'un plan sensiblement perpendiculaire à l'axe longitudinal L de cette seconde fixation, selon lequel cette seconde fixation assure le positionnement du radôme 2, soit sensiblement perpendiculaire à la tangente au périmètre du radôme au point où la distance est minimale entre d'une part ledit périmètre 3 du radôme 2 et d'autre part l'axe longitudinal L de cette fixation (ledit seul axe, parallèle à la ligne B-B représentée figure 6b, est alors inclus dans le plan de coupe de la figure 8), cette fixation permet de fixer la position du radôme 2 en affleurement du fuselage 1 tout en conservant un jeu de montage selon un axe perpendiculaire à la fois audit seul axe et à l'axe longitudinal L de la fixation. La valeur de ce jeu de montage peut atteindre plusieurs millimètres. Ce jeu de montage permet de monter le radôme 2 sur le fuselage 1 de l'aéronef en évitant de créer des contraintes mécaniques dans ce radôme, même en cas de déformations dudit radôme dues notamment au fait que le matériau constitutif du radôme est plus souple et plus déformable que la structure du fuselage sur lequel est fixé ce radôme. Chaque seconde fixation 12 assure en outre le positionnement du radôme 2 relativement au fuselage 1 selon l'axe longitudinal L de cette seconde fixation.

Dans le cas du mode préféré de réalisation de la partie convexe 24 des secondes fixations 12, selon lequel le diamètre de la face plane 32 de cette partie convexe est légèrement inférieur au diamètre d'une face plane complémentaire de la partie concave 42 de la seconde fixation considérée, sur laquelle la face plane vient en appui lorsque ladite seconde fixation est assemblée, ledit diamètre de la face plane 32 est choisi de façon à ce que la seconde fixation considérée comporte un léger jeu, radial par rapport à l'axe longitudinal L de cette fixation, de quelques dixièmes de millimètres, de préférence environ 5 dixièmes de millimètres. Ce léger jeu radial permet de faciliter le montage de la fixation considérée, notamment s'il existe des écarts de géométrie des différentes pièces dus aux tolérances de fabrication, sans pour autant avoir des conséquences significatives sur la qualité de l'affleurement de la surface extérieure du radôme 2 avec la surface extérieure du fuselage 1.

Le radôme 2 peut comporter sur sa surface extérieure des bandes métalliques utilisées pour écouler vers le fuselage 1 de l'aéronef des courants dus à l'impact de la foudre sur ce radôme. Avantageusement, les différentes parties 54, 14, 24, 40, 46, 48, 50 constitutives d'au moins certaines des premières et/ou secondes fixations 10, 12 sont électriquement conductrices de façon à ce que la fixation considérée assure la continuité électrique entre le radôme et le fuselage 1 de l'aéronef. Lesdites bandes métalliques sont reliées électriquement à des ferrures 54 de fixations 10, 12 électriquement conductrices, par exemple au moyen de vis traversant la paroi du radôme 2. Le nombre et les dimensions des fixations électriquement conductrices sont choisis pour permettre l'écoulement vers le fuselage des courants maximaux dus aux impacts de la foudre sur le radôme 2. Ces courants maximaux sont ceux pris en compte lors de la certification de l'aéronef par les différentes autorités de certification. Dans un mode préféré de réalisation, les différentes fixations 10, 12 sont toutes conductrices. Dans le mode de réalisation correspondant à la figure 4 dans lequel quatre premières fixations 10 et treize secondes fixations 12 sont mises en oeuvre, le diamètre moyen de la partie sensiblement sphérique 20, 30 des parties convexes 14, 24 est d'environ 38 millimètres, la distance entre les plans P1 et P2 des parties convexes 24 des secondes fixations est d'environ 24 millimètres et le diamètre des vis 48 est d'environ 9 millimètres. Ces caractéristiques permettent à la fois de supporter les efforts mécaniques nécessaires à la fixation du radôme 2 sur le fuselage 1 et d'autre part d'écouler lesdits courants de foudre vers le fuselage.

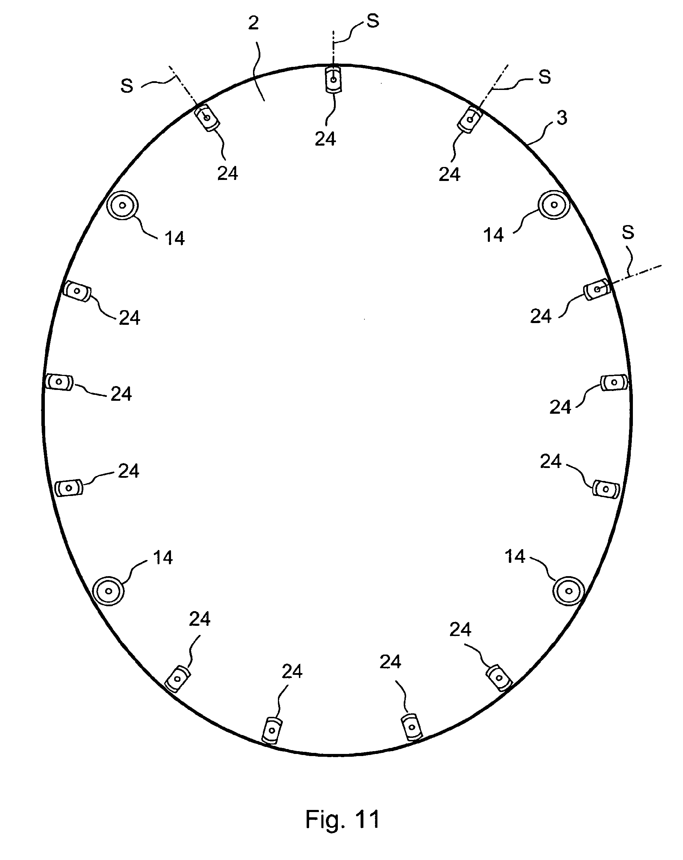

L'invention concerne aussi un procédé de montage d'un radôme 2 sur la pointe avant d'un aéronef qui comporte les étapes suivantes dans un mode préféré de réalisation :
- a1) fixer un ensemble de ferrures 54 à l'intérieur dudit radôme, réparties à proximité du périmètre 3 de ce radôme venant en contact avec le fuselage 1 de l'aéronef ;
- a2) surfacer et aléser chacune des ferrures (54) mises en place à l'étape a1). Cette étape permet avantageusement de positionner chaque fixation avec la précision requise sur le radôme 2 ;
- b1) choisir un sous-ensemble de ferrures réparties dans l'ensemble de ferrures fixées sur le radôme à l'étape a1) et fixer une partie de forme convexe 14 correspondant à une première fixation 10 sur chacune des ferrures 54 dudit sous-ensemble, comme représenté figure 11 ;
- b2) fixer une partie de forme convexe 24 correspondant à une seconde fixation 12 sur chacune des ferrures 54 placées à l'étape a1) et n'appartenant pas au sous-ensemble choisi à l'étape b1), en orientant ladite partie de forme convexe de façon à ce que ledit seul axe S selon lequel est assuré le positionnement du radôme par la seconde fixation considérée soit sensiblement perpendiculaire à la tangente au périmètre 3 du radôme au point où la distance entre d'une part ledit périmètre du radôme et d'autre part l'axe longitudinal de ladite fixation est minimale. L'orientation des parties convexes 14 par rapport au périmètre 3 du radôme est représentée sur la figure11. Afin de ne pas surcharger la figure, ledit seul axe S est représenté pour seulement quatre des parties convexes 14 ;
- c) fixer des goujons 40 comportant chacun une partie de forme concave 42 sur un cadre 50 du fuselage 1, de façon à ce que ces parties de forme concave soient en regard de chacune desdites parties de forme convexe 14, 24 lorsque le radôme est placé à sa position prévue sur l'aéronef ;
- d) mettre en place des tiges de guidage 52 sur chacune des parties de forme convexe 14 correspondant à des premières fixations 10 placées à l'étape b1) ;
- e) présenter le radôme devant le fuselage et insérer lesdites tiges de guidage 52 mises en place à l'étape d) dans les parties de forme concave 42 correspondantes fixées sur le fuselage à l'étape c) jusqu'à ce que lesdites tiges de guidage traversent lesdites parties de forme concave et les goujons 40 correspondants ;
- f) mettre en place un dispositif de verrouillage à l'extrémité de chacune desdites tiges de guidage 52 de façon à sécuriser la mise en place du radôme 2 sur le fuselage 1 de l'aéronef ;
- g) mettre en place une vis 48 dans les trous, coaxiaux de l'axe longitudinal L, de chacun des goujons 40 (et par conséquent de chacune des parties concaves 42) des secondes fixations 12, par la face dudit goujon opposée à sa partie concave 42 en contact avec la partie convexe 24 solidaire du radôme et visser cette vis dans le trou taraudé 26 de cette partie convexe 24 ;
- h) enlever les tiges de guidage 52 des premières fixations 10 et les remplacer par des vis 48 de façon similaire aux secondes fixations (étape g)).

## Revendications

1. Dispositif de fixation d'un radôme (2) d'aéronef **caractérisé en ce qu**'il comporte :
- une pluralité de premières fixations (10) aptes à assurer chacune un positionnement dudit radôme selon deux axes distincts contenus dans un plan sensiblement perpendiculaire à l'axe longitudinal (L) de cette fixation ; et
- une pluralité de secondes fixations (12) aptes à assurer chacune un positionnement dudit radôme, lors de son montage, selon un seul axe d'un plan sensiblement perpendiculaire à l'axe longitudinal (L) de cette fixation.

2. Dispositif de fixation selon la revendication 1, **caractérisé en ce que** ledit seul axe selon lequel est assuré le positionnement du radôme (2) par chacune desdites secondes fixations est sensiblement perpendiculaire à la tangente au périmètre (3) du radôme (2) au point où la distance entre d'une part ledit périmètre du radôme et d'autre part l'axe longitudinal (L) de ladite fixation est minimale.

3. Dispositif de fixation selon les revendications 1 ou 2, **caractérisé en ce que** ledit plan sensiblement perpendiculaire à l'axe longitudinal (L) de chaque fixation est sensiblement perpendiculaire à l'axe longitudinal de l'aéronef.

4. Dispositif de fixation selon l'une quelconque des revendications précédentes, **caractérisé en ce que** lesdites premières et secondes fixations sont accessibles depuis l'intérieur dudit radôme.

5. Dispositif de fixation selon l'une quelconque des revendications précédentes, **caractérisé en ce que** lesdites premières et secondes fixations comportent chacune une partie de forme convexe (14, 24) solidaire du radôme (2), apte à être engagée dans une partie de forme concave (42) solidaire du fuselage (1) de l'aéronef.

6. Dispositif de fixation selon l'une quelconque des revendications 1 à 4, **caractérisé en ce que** lesdites premières et secondes fixations (10, 12) comportent chacune une partie de forme concave (42) solidaire du radôme, apte à être engagée dans une partie de forme convexe (14, 24) solidaire du fuselage (1) de l'aéronef.

7. Dispositif de fixation selon l'une des revendications 5 ou 6, **caractérisé en ce que** ladite partie de forme convexe (14), relative aux premières fixations (10), est de forme sensiblement hémisphérique.

8. Dispositif de fixation selon l'une quelconque des revendications 5 à 7, **caractérisé en ce que** ladite partie de forme convexe (24), relative aux secondes fixations (12), est de forme sensiblement hémisphérique, tronquée par deux plans (P1, P2) sensiblement parallèles à l'axe longitudinal (L) de la fixation et situés de part et d'autre de cet axe longitudinal.

9. Dispositif de fixation selon l'une des revendications 7 ou 8, **caractérisé en ce que** ladite partie de forme sensiblement hémisphérique (20, 30) est tronquée dans la partie (22, 32) opposée à sa base.

10. Dispositif de fixation selon l'une des revendications 8 ou 9, **caractérisé en ce que** ladite partie de forme concave (42) de chacune des premières et secondes fixations est complémentaire de la partie de forme convexe (14) sensiblement hémisphérique correspondant aux premières fixations (10).

11. Dispositif de fixation selon l'une quelconque des revendications précédentes, **caractérisé en ce que** lesdites premières et secondes fixations comportent une ferrure (54) solidaire de la coque du radôme (2).

12. Dispositif de fixation selon l'une quelconque des revendications précédentes, **caractérisé en ce que** lesdites premières et secondes fixations sont des fixations vissées.

13. Dispositif de fixation selon l'une quelconque des revendications 5 à 12, **caractérisé en ce que** la partie de forme concave (42) de chacune des premières (10) et secondes (12) fixations est percée selon l'axe longitudinal (L) de la fixation considérée de façon à pouvoir recevoir une vis (48) pour solidariser cette partie de forme concave avec la partie de forme convexe complémentaire (14, 24).

14. Dispositif de fixation selon la revendication 13, **caractérisé en ce que** la partie de forme convexe (14, 24) de chacune des premières et secondes fixations est percée selon l'axe longitudinal (L) de la fixation considérée et taraudée de façon à pouvoir recevoir une vis (48) pour solidariser cette partie de forme convexe avec la partie de forme concave complémentaire (42).

15. Dispositif de fixation selon la revendication 14, **caractérisé en ce que** la partie de forme convexe (14) de chacune des premières fixations (10) est apte à recevoir une tige de guidage (52) apte à coopérer avec la partie de forme concave (42) de la fixation considérée pour guider le radôme (2) lors de la mise en place dudit radôme sur le fuselage (1).

16. Dispositif de fixation selon l'une quelconque des revendications précédentes, **caractérisé en ce qu**'au moins une partie (54, 14, 24, 40, 46, 48, 50) desdites premières (10) et/ou secondes (12) fixations sont réalisées au moins partiellement dans au moins un matériau électriquement conducteur et sont raccordées électriquement à un élément conducteur situé sur la surface extérieure du radôme.

17. Dispositif de fixation selon la revendication 16, **caractérisé en ce que** le nombre et le dimensionnement des fixations électriquement conductrices sont prévus pour permettre l'écoulement des courants dus aux impacts de foudre sur le radôme (2) vers le fuselage (1) de l'aéronef.

18. Aéronef comportant un radôme (2) de pointe avant **caractérisé en ce que** ledit radôme est fixé au fuselage (1) de l'aéronef au moyen d'un dispositif de fixation selon l'une quelconque des revendications précédentes.

19. Procédé de montage d'un radôme (2) sur la pointe avant d'un aéronef **caractérisé en ce qu**'il comporte les étapes suivantes :
- a1) fixer un ensemble de ferrures (54) à l'intérieur dudit radôme, réparties à proximité du périmètre (3) de ce radôme venant en contact avec le fuselage (1) de l'aéronef ;
- b1) choisir un sous-ensemble de ferrures réparties dans l'ensemble de ferrures fixées sur le radôme à l'étape a1) et fixer une partie de forme convexe (14) correspondant à une première fixation (10) selon la revendication 7 sur chacune des ferrures (54) dudit sous-ensemble ;
- b2) fixer une partie de forme convexe (24) correspondant à une seconde fixation (12) selon la revendication 8 sur chacune des ferrures (54) placées à l'étape a1) et n'appartenant pas au sous-ensemble choisi à l'étape b1), en orientant ladite partie de forme convexe de façon à ce que ledit seul axe selon lequel est assuré le positionnement du radôme par la seconde fixation considérée soit sensiblement perpendiculaire à la tangente au périmètre (3) du radôme au point où la distance entre d'une part ledit périmètre du radôme et d'autre part l'axe longitudinal de ladite fixation est minimale ;
- c) fixer des parties de forme concave (42) sur un cadre (50) du fuselage (1), de façon à ce que ces parties de forme concave soient en regard de chacune desdites parties de forme convexe (14, 24) lorsque le radôme est placé à sa position prévue sur l'aéronef ;
- d) mettre en place des tiges de guidage (52) sur chacune des parties de forme convexe (14) correspondant à des premières fixations (10) placées à l'étape b1) ;
- e) présenter le radôme devant le fuselage et insérer lesdites tiges de guidage (52) mises en place à l'étape d) dans les parties de forme concave (42) correspondantes fixées sur le fuselage à l'étape c) jusqu'à ce que lesdites tiges de guidage traversent lesdites parties dé forme concave ;
- f) mettre en place un dispositif de verrouillage à l'extrémité de chacune desdites tiges de guidage (52) de façon à sécuriser la mise en place du radôme (2) sur le fuselage (1) de l'aéronef ;
- g) mettre en place une vis (48) dans chacune des parties concaves (42) des secondes fixations (12), par la face de ladite partie concave opposée à sa face en contact avec la partie convexe (24) solidaire du radôme et visser cette vis dans cette partie convexe (24) ;
- h) enlever les tiges de guidage (52) des premières fixations (10) et les remplacer par des vis (48) de façon similaire aux secondes fixations (étape g)).

20. Procédé de montage d'un radôme selon la revendication 19 **caractérisé en ce qu**'il comporte en outre l'étape suivante après l'étape a1) :
- a2) surfacer et aléser chacune des ferrures (54) mises en place à l'étape a1).

## Claims

1. Device for fastening an aircraft radome (2) **characterised in that** it comprises:
- a plurality of first fasteners (10) designed to put said radome into a position along two distinct axes contained in a plane approximately perpendicular to the longitudinal axis (L) of this fastener; and
- a plurality of second fasteners (12) each designed to put said radome, during its assembly, into a position along a single axis of a plane approximately perpendicular to the longitudinal axis (L) of this fastener.

2. Fastening device according to claim 1, **characterised in that** said single axis along which the radome (2) is positioned by each of said second fasteners is approximately perpendicular to the tangent to the perimeter (3) of the radome (2) at the point at which the distance between firstly said perimeter of the radome and secondly the longitudinal axis (L) of said fastener is minimum.

3. Fastening device according to claim 1 or 2, **characterised in that** said plane approximately perpendicular to the longitudinal axis (L) of each fastener is approximately perpendicular to the longitudinal axis of the aircraft.

4. Fastening device according to any one of the previous claims, **characterised in that** said first and second fasteners are accessible from inside said radome.

5. Fastening device according to any one of the previous claims, **characterised in that** said first and second fasteners each comprise a convex-shaped part (14, 24) fixed to the radome (2), that can be engaged in a concave-shaped part (42) fixed to the aircraft fuselage (1).

6. Fastening device according to any one of claims 1 to 4, **characterised in that** said first and second fasteners (10, 12) each comprise a concave-shaped part (42) fixed to the radome, that can be engaged in a convex-shaped part (14, 24) fixed to the aircraft fuselage (1).

7. Fastening device according to one of claims 5 or 6, **characterised in that** said convex-shaped part (14), for the first fasteners (10), is approximately hemispherical in shape.

8. Fastening device according to any one of claims 5 to 7, **characterised in that** said convex-shaped part (24) for the second fasteners (12), is approximately hemispherical in shape, truncated by two planes (P1, P2) approximately parallel to the longitudinal axis (L) of the fastener and located on each side of this longitudinal axis.

9. Fastening device according to one of claims 7 or 8, **characterised in that** said approximately hemispherical part (20, 30) is truncated in the part (22, 32) opposite its base.

10. Fastening device according to one of claims 8 or 9, **characterised in that** said concave-shaped part (42) of each of the first and second fasteners is complementary to the convex-shaped part (14) approximately in an hemispherical shape corresponding to the first fasteners (10).

11. Fastening device according to any one of the previous claims, **characterised in that** said first and second fasteners comprise a fitting (54) fixed to the fairing of the radome (2).

12. Fastening device according to any one of the previous claims, **characterised in that** said first and second fasteners are screwed fasteners.

13. Fastening device according to any one of claims 5 to 12, **characterised in that** the concave-shaped part (42) of the first (10) and second (12) fasteners is drilled along the longitudinal axis (L) of the fastener considered so that a screw (48) can be fitted in it to solidarise this concave-shaped part with the complementary convex-shaped part (14, 24).

14. Fastening device according to claim 13, **characterised in that** the convex-shaped part (14, 24) of each of the first and second fasteners is drilled along the longitudinal axis (L) of the fastener considered and is threaded on the inside so that a screw (48) can be inserted in it to fix this convex-shaped part with the complementary concave-shaped part (42).

15. Fastening device according to claim 14, **characterised in that** the convex-shaped part (14) of each of the first fasteners (10) can hold a guide rod (52) that can cooperate with the concave-shaped part (42) of the fastener considered to guide the radome (2) during placement of said radome on the fuselage (1).

16. Fastening device according to any one of the previous claims, **characterised in that** at least part (54, 14, 24, 40, 46, 48, 50) of said first (10) and/or second (12) fasteners is made at least partially from an electrically conducting material and is electrically connected to a conducting element located on the outside surface of the radome.

17. Fastening device according to claim 16, **characterised in that** the number and dimensions of the electrically conducting fasteners are chosen to allow maximum currents caused by lightning strikes on the radome (2) to travel towards the fuselage (1).

18. Aircraft comprising a radome (2) located in the nose **characterised in that** said radome is fixed to the aircraft fuselage (1) using a fastening device according to any one of the previous claims.

19. Assembly method for assembling a radome (2) on the nose of an aircraft, **characterised in that** it comprises the following steps:
- a1) fix a set of fittings (54) inside said radome, distributed close to the perimeter (3) of this radome coming into contact with the aircraft fuselage (1);
- b1) choose a subset of fittings distributed among the set of fittings fixed to the radome in step a1) and fix a convex-shaped part (14) corresponding to a first fastener (10) according to claim 7, onto each of the fittings (54) of said subset;
- b2) fix a convex-shaped part (24) corresponding to a second fastener (12) according to claim 8, on each of the fittings (54) placed during step a1) and not belonging to the subset chosen in step b1), orienting said convex-shaped part such that said single axis according to which said second fastener positions the radome is approximately perpendicular to the tangent to the perimeter (3) of the radome at the point at which the distance between firstly said perimeter of the radome and secondly the longitudinal axis of said fastener is minimum;
- c) fix concave-shaped parts (42) on a frame (50) of the fuselage (1), so that these concave-shaped parts are facing each of said convex-shaped parts (14, 24) when the radome is in its planned position on the aircraft;
- d) put guide rods (52) into position on each of the convex-shaped parts (14) corresponding to first fasteners (10) put into position during step b1);
- e) offer up the radome in front of the fuselage and insert said guide rods (52) placed in step d) into the concave-shaped parts (42) corresponding to them fixed on the fuselage in step c) until said guide rods pass through said concave-shaped parts;
- f) put a locking device into position at the end of each of said guide rods (52) so as to secure placement of the radome (2) on the aircraft fuselage (1);
- g) put a screw (48) into position in each of the concave-shaped parts (42) of the second fasteners (12), through the face of said concave part opposite its face in contact with the convex part (24) fixed to the radome and screw this screw into this convex part (24);
- h) remove the guide rods (52) from the first fasteners (10) and replace them with screws (48) in the same way as for the second fasteners (step g)).

20. Assembly method for assembling a radome according to claim 19, **characterised in that** it comprises also the following step after step a1):
- a2) surface, and bore each of the fittings (54) put into place in step a1).

## Patentansprüche

1. Vorrichtung zur Befestigung eines Luftfahrzeug-Radoms (2), **dadurch gekennzeichnet, dass** sie aufweist:
- mehrere erste Befestigungen (10), die fähig sind, jede eine Positionierung des Radoms gemäß zwei unterschiedlichen Achsen zu gewährleisten, die in einer Ebene im Wesentlichen lotrecht zur Längsachse (L) dieser Befestigung enthalten sind; und
- mehrere zweite Befestigungen (12), die fähig sind, jede eine Positionierung des Radoms bei seiner Montage gemäß einer einzigen Achse einer Ebene zu gewährleisten, die im Wesentlichen lotrecht zur Längsachse (L) dieser Befestigung ist.

2. Befestigungsvorrichtung nach Anspruch 1, **dadurch gekennzeichnet, dass** die einzige Achse, gemäß der die Positionierung des Radoms (2) von jeder der zweiten Befestigungen gewährleistet wird, im Wesentlichen lotrecht zu der Tangente zum Umfang (3) des Radoms (2) an dem Punkt ist, an dem der Abstand zwischen einerseits dem Umfang des Radoms und andererseits der Längsachse (L) der Befestigung minimal ist.

3. Befestigungsvorrichtung nach einem der Ansprüche 1 oder 2, **dadurch gekennzeichnet, dass** die Ebene im Wesentlichen lotrecht zur Längsachse (L) jeder Befestigung im Wesentlichen lotrecht zur Längsachse des Luftfahrzeugs ist.

4. Befestigungsvorrichtung nach einem der vorhergehenden Ansprüche, **dadurch gekennzeichnet, dass** die ersten und zweiten Befestigungen von innerhalb des Radoms zugänglich sind.

5. Befestigungsvorrichtung nach einem der vorhergehenden Ansprüche, **dadurch gekennzeichnet, dass** die ersten und zweiten Befestigungen je einen Teil von konvexer Form (14, 24) aufweisen, der fest mit dem Radom (2) verbunden und fähig ist, in einen Teil von konkaver Form (42) eingeführt zu werden, der fest mit dem Rumpf (1) des Luftfahrzeugs verbunden ist.

6. Befestigungsvorrichtung nach einem der Ansprüche 1 bis 4, **dadurch gekennzeichnet, dass** die ersten und zweiten Befestigungen (10, 12) je einen fest mit dem Radom verbundenen Teil von konkaver Form (42) aufweisen, der fähig ist, in einen Teil von konvexer Form (14, 24) eingeführt zu werden, der fest mit dem Rumpf (1) des Luftfahrzeugs verbunden ist.

7. Befestigungsvorrichtung nach einem der Ansprüche 5 oder 6, **dadurch gekennzeichnet, dass** der Teil von konvexer Form (14) bezüglich der ersten Befestigungen (10) im Wesentlichen eine Halbkugelform hat.

8. Befestigungsvorrichtung nach einem der Ansprüche 5 bis 7, **dadurch gekennzeichnet, dass** der Teil von konvexer Form (24) bezüglich der zweiten Befestigungen (12) im Wesentlichen eine Halbkugelform hat, abgeschnitten durch zwei Ebenen (P1, P2) im Wesentlichen parallel zur Längsachse (L) der Befestigung und zu beiden Seiten dieser Längsachse angeordnet.

9. Befestigungsvorrichtung nach einem der Ansprüche 7 oder 8, **dadurch gekennzeichnet, dass** der Teil von im Wesentlichen Halbkugelform (20, 30) in dem Teil (22, 32) entgegengesetzt zu seiner Basis abgeschnitten ist.

10. Befestigungsvorrichtung nach einem der Ansprüche 8 oder 9, **dadurch gekennzeichnet, dass** der Teil von konkaver Form (42) jeder der ersten und zweiten Befestigungen komplementär zu dem im Wesentlichen halbkugelförmigen Teil von konvexer Form (14) entsprechend den ersten Befestigungen (10) ist.

11. Befestigungsvorrichtung nach einem der vorhergehenden Ansprüche, **dadurch gekennzeichnet, dass** die ersten und zweiten Befestigungen einen Beschlag (54) aufweisen, der fest mit der Schale des Radoms (2) verbunden ist.

12. Befestigungsvorrichtung nach einem der vorhergehenden Ansprüche, **dadurch gekennzeichnet, dass** die ersten und zweiten Befestigungen geschraubte Befestigungen sind.

13. Befestigungsvorrichtung nach einem der Ansprüche 5 bis 12, **dadurch gekennzeichnet, dass** der Teil von konkaver Form (42) jeder der ersten (10) und zweiten (12) Befestigungen gemäß der Längsachse (L) der betrachteten Befestigung durchbohrt ist, um eine Schraube (48) aufnehmen zu können, um diesen Teil von konkaver Form fest mit dem komplementären Teil von konvexer Form (14, 24) zu verbinden.

14. Befestigungsvorrichtung nach Anspruch 13, **dadurch gekennzeichnet, dass** der Teil von konvexer Form (14, 24) jeder der ersten und zweiten Befestigungen gemäß der Längsachse (L) der betrachteten Befestigung durchbohrt und mit einem Innengewinde versehen ist, um eine Schraube (48) aufnehmen zu können, um diesen Teil von konvexer Form fest mit dem komplementären Teil von konkaver Form (42) zu verbinden.

15. Befestigungsvorrichtung nach Anspruch 14, **dadurch gekennzeichnet, dass** der Teil von konvexer Form (14) jeder der ersten Befestigungen (10) fähig ist, eine Führungsstange (52) aufzunehmen, die fähig ist, mit dem Teil von konkaver Form (42) der betrachteten Befestigung zusammenzuwirken, um das Radom (2) beim Einsetzen des Radoms auf dem Rumpf (1) zu führen.

16. Befestigungsvorrichtung nach einem der vorhergehenden Ansprüche, **dadurch gekennzeichnet, dass** mindestens ein Teil (54, 14, 24, 40, 46, 48, 50) der ersten (10) und/oder zweiten (12) Befestigungen mindestens teilweise aus mindestens einem elektrisch leitenden Werkstoff hergestellt und elektrisch mit einem leitenden Element verbunden ist, das sich auf der Außenfläche des Radoms befindet.

17. Befestigungsvorrichtung nach Anspruch 16, **dadurch gekennzeichnet, dass** die Anzahl und die Abmessung der elektrisch leitenden Befestigungen vorgesehen sind, um das Fließen der durch die Blitzeinschläge auf das Radom (2) erzeugten Ströme zum Rumpf (1) des Luftfahrzeugs zu erlauben.

18. Luftfahrzeug mit einem Bug-Radom (2), **dadurch gekennzeichnet, dass** das Radom am Rumpf (1) des Luftfahrzeugs mit Hilfe einer Befestigungsvorrichtung nach einem der vorhergehenden Ansprüche befestigt wird.

19. Verfahren zur Montage eines Radoms (2) am Bug eines Luftfahrzeugs, **dadurch gekennzeichnet, dass** es die folgenden Schritte aufweist:
- a1) Befestigen einer Einheit von Beschlägen (54) im Inneren des Radoms, die in der Nähe des Umfangs (3) dieses Radoms verteilt sind, der mit dem Rumpf (1) des Luftfahrzeugs in Kontakt kommt;
- b1) Wahl einer Untereinheit von Beschlägen, die in der Einheit von Beschlägen verteilt sind, die im Schritt a1) am Radom befestigt werden, und Befestigen eines Teils von konvexer Form (14) entsprechend einer ersten Befestigung (10) gemäß Anspruch 7 an jedem der Beschläge (54) der Untereinheit;
- b2) Befestigen eines Teils von konvexer Form (24) entsprechend einer zweiten Befestigung (12) gemäß Anspruch 8 an jedem der Beschläge (54), die im Schritt a1) angeordnet werden und nicht zu der Untereinheit gehören, die im Schritt b1) gewählt wird, indem der Teil von konvexer Form so ausgerichtet wird, dass die einzige Achse, gemäß der die Positionierung des Radoms durch die zweite betrachtete Befestigung gewährleistet wird, im Wesentlichen lotrecht zur Tangente zum Umfang (3) des Radoms an dem Punkt ist, an dem der Abstand zwischen einerseits dem Umfang des Radoms und andererseits der Längsachse der Befestigung minimal ist;
- c) Befestigen der Teile von konkaver Form (42) an einem Rahmen (50) des Rumpfs (1) derart, dass diese Teile von konkaver Form sich vor jedem der Teile von konvexer Form (14, 24) befinden, wenn das Radom in seiner vorgesehenen Stellung auf dem Luftfahrzeug angeordnet ist;
- d) Einsetzen der Führungsstangen (52) auf jedem der Teile von konvexer Form (14) entsprechend ersten Befestigungen (10), die im Schritt b1) eingesetzt werden;
- e) Anordnen des Radoms vor dem Rumpf und Einführen der Führungsstangen (52), die im Schritt d) angeordnet wurden, in die entsprechenden Teile von konkaver Form (42), die im Schritt c) am Rumpf befestigt wurden, bis die Führungsstangen die Teile von konkaver Form durchqueren;
- f) Anordnen einer Verriegelungsvorrichtung am Ende jeder der Führungsstangen (52), um das Anordnen des Radoms (2) auf dem Rumpf (1) des Luftfahrzeugs zu sichern;
- g) Anordnen einer Schraube (48) in jedem der konkaven Teile (42) der zweiten Befestigungen (12) über die Seite des konkaven Teils, die seiner Seite entgegengesetzt liegt, die mit dem fest mit dem Radom verbundenen konvexen Teil (24) in Kontakt ist, und Einschrauben dieser Schraube in diesen konvexen Teil (24);
- h) Entfernen der Führungsstangen (52) aus den ersten Befestigungen (10) und ihr Ersetzen durch Schrauben (48) in gleicher Weise wie bei den zweiten Befestigungen (Schritt g)).

20. Verfahren zur Montage eines Radoms nach Anspruch 19, **dadurch gekennzeichnet, dass** es außerdem den folgenden Schritt nach dem Schritt a1) aufweist:
- a2) Planschleifen und Durchbohren jedes der Beschläge (54), die im Schritt a1) angeordnet wurden.
